# EUROPÄISCHE PATENTSCHRIFT

(11) **EP 2 133 214 B1**
(45) Veröffentlichungstag und Bekanntmachung des Hinweises auf die Patenterteilung: **04.07.2012**
(21) Anmeldenummer: 09007260.4
(22) Anmeldetag: 30.05.2009
(51) Int. Cl.: B43K 19/00, C09D 13/00, B43K 19/18

(54) **Mine für Schreib-, Zeichen- und/oder Markiergeräte und Verfahren zu deren Herstellung**
Lead for writing, illustrating and/or marking devices and manufacturing method
Mine pour appareils d'écriture, de dessin et/ou de marquage et leur procédé de fabrication

(30) Priorität: 14.06.2008 DE 102008028445
(43) Veröffentlichungstag der Anmeldung: 16.12.2009
(73) Patentinhaber: J.S. Staedtler GmbH & Co. KG, 90427 Nürnberg (DE)
(72) Erfinder: Wohlleb, Thomas, 90768 Fürth (DE)

(56) Entgegenhaltungen:
- EP-A1- 1 069 166
- DE-A1- 19 544 320
- US-A- 5 261 952
- US-A- 6 011 084
- US-A1- 2002 025 995
- US-B1- 6 271 286

## Beschreibung

Die Erfindung betrifft Minen für Schreib-, Zeichen- und/oder Malgeräte nach dem Oberbegriff des Hauptanspruchs, sowie das Verfahren zu deren Herstellung.

Derartige Minen zum Schreiben, Zeichnen und/oder Malen sind prinzipiell bekannt.

Aus dem **Stand der Technik** sind Buntminen bekannt, welche hochwertige Abstricheigenschaften im Punkto Farbabgabe, Gleitvermögen und Wachsigkeit, aufweisen. Derartige Minen werden nach ihrer Trocknung imprägniert, d.h. in Imprägnierbädern mit flüssigen Wachsen getaucht und damit getränkt. Dabei füllt man die bei der Trocknung entstandenen Poren und Zwischenräume mit Wachs als Gleitmittel auf. Auf diese Art stellt man die Maleigenschaften einer Mine, wie z. B. das Gleitverhalten, die Wachsigkeit und/oder die Farbabgabe ein. Nachteilig ist es bei derartigen Minen anzusehen, dass durch einen zusätzlichen Prozessschritt in der Herstellung zusätzliche Kosten anfallen, wobei der zusätzliche Prozessschritt zudem zeitlich schwer steuerbar ist. Auch die der Imprägnation vorausgehenden Prozessschritte müssen genau auf die nachfolgende Imprägnation abgestimmt sein, z.B. muss die Minenfeuchte beachtet werden.

Weiter ist es als nachteilig anzusehen, dass bereits imprägnierte Minen an deren Oberfläche gereinigt werden müssen, um negative Effekte bei der Einleimung der Mine in Holz zu minimieren.

Neben diesen bereits genannten Nachteilen tritt bei der Minenherstellung ein erhöhter Ausschuss durch Minenverzug auf.

Auch die Ästhetik von imprägnierten Minen ist beeinträchtigt, da ein so genanntes Ausbluten zu beobachten ist.

**Aufgabe** ist es daher, eine Mine zu schaffen, die die eingangs genannten Nachteile nicht aufweist und die insbesondere ein exzellentes Gleitverhalten und ein sehr gutes Abstrichverhalten hinsichtlich der Farbabgabe aufweist, welches bis dato nur bei qualitativ hochwertigen, imprägnierten Minen bekannt war. **Gelöst wurde die Aufgabe dadurch,** dass alle Minenbestandteile, welche zur Lösung der gestellten Aufgabe benötigt werden, bereits in der Rezeptur vor der Verarbeitung enthalten sind.

Dass es sich bei dem System Mine um ein sehr sensibles System handelt zeigt sich in den nachfolgend beschriebenen Vorgehensweisen.

Es hat sich gezeigt, dass beim Versuch die Farbabgabe zu optimieren, z. B. durch das Erhöhen des Pigmentgehaltes, Grenzen gesetzt sind, da die Farbtiefe nicht beliebig zunimmt und vor allem bei diesem Vorgehen die Gleitfähigkeit der Mine auf dem Medium signifikant schlechter wird. Unabhängig davon steigen die Herstellungs- bzw. Rezepturkosten an.

Auch die ledigliche Steigerung des Wachsgehaltes führt nicht zum gewünschten Ergebnis, da sich negative Auswirkungen auf den Mischprozess einstellen, die Minenfestigkeit stark sinkt, das Bröselverhalten ansteigt und sich die Geschlossenheit des Abstriches verschlechtert.

Durch das Senken des Bindegehaltes konnte zwar das Abstrichverhalten verbessert werden, was sich allerdings auf die Minenfestigkeit auswirkt.

Bei der Lösung der gestellten Aufgabe hat sich in überraschender Weise gezeigt, dass bei ungebrannten Buntminen, Wachs auf Basis von Kohlenwasserstoffen und/oder Paraffinen mit einem Schmelzpunkt über 75°C, vorzugsweise über 80°C zur Lösung der Aufgabe beiträgt. Derartige Wachse weisen keine Wechselwirkung mit den freien OH-Gruppen von Papieroberflächen auf, was eine gute Gleitwirkung auf diesem oder anderen Abstrichmedien zur Folge hat.

Durch die Zugabe eines derartigen Wachses wird die nötige Festigkeit der Minen nicht beeinflusst.

Das bereits in der Rezeptur/Grundmischung der Mine eingesetzte Wachs schmilzt bzw. verflüssigt sich erst beim Trocknen der extrudierten Mine und wird somit nicht bereits im Mischprozess vom Bindemittel eingelagert oder vom Füllstoff aufgenommen, sondern in den Poren und Zwischenräumen verteilt. Die Temperatur im Mischprozess liegt bei etwa 70°C.

Beispiele für derartige Wachse die zur Lösung der Aufgabe beitragen sind Mikro-oder Polarwachs.

Unter Paraffinen versteht man ein Gemisch aus Alkanen, gesättigten Kohlenwasserstoffen mit der allgemeinen Summenformel CₙH₂ₙ₊₂. Liegt der Erstarrungspunkt der Paraffine um die 80°C, so spricht man auch von so genannten Mikrowachsen. Die Kettenlänge n in der Summenformel liegt bei bis zu 75 Kohlenwasserstoffen. Bei Mikrowachsen liegt die Struktur von iso-Paraffinen vor.

Die bevorzugt eingesetzten Wachse können als höhermolekulare, aliphatische, teilverzweigte Kohlenwasserstoffwachse mit mikrowachsartiger Struktur beschrieben werden. Diese weisen einen Erstarrungspunkt von 90 bis 95°C auf und der Tropfpunkt liegt ab etwa 100°C.

Weiter hat sich in überraschender Weise gezeigt, dass zur Lösung der Aufgabe ein Füllstoff mit schichtförmiger oder blättchenförmiger Kristallstruktur und/oder geringer Korngröße benötigt wird, wobei die Korngröße bei einer Obergrenze von ca. 20 µm, vorzugsweise kleiner 10 µm (Bestimmung mittels Sedigraph 5100) begrenzt ist. Durch die geringe Korngröße kann eine sehr gute Festigkeit ohne Kratzen beim Abmalen erreicht werden.

Die Verwendung dieses schichtartig aufgebauten Füllstoffs führt ferner zu einem sauberen Abschuppen auf der Schreiboberfläche und somit zu einer guten Gleitwirkung.

Durch eine geringe Mohs'sche Härte des Füllstoffs mit einem Wert von = 1, wird ein weiches Schreibverhalten erreicht.

Beispiele für einen derartigen Füllstoff sind Talkum und Bornitrid. Ganz allgemein eignen sich Füllstoffe, welche weich, fein und/oder blättchenförmig ausgebildet sind.

Die erfindungsgemäße Mine soll anhand der Rahmenrezeptur und Rezepturbeispiele näher erläutert werden.

### Rahmenrezeptur

| | |
|---|---|
| Gleitmittel (GM) | 2 -10 Gew.% |
| Bindemittel (BM) | 4 -10 Gew.% |
| Wachs | 5 - 20 Gew.% |
| Füllstoff (FS) | 30 - 70 Gew.% |
| Pigmente (FM 1) | 0 -18 Gew.% |
| Titandioxid (FM 2) | 0 - 35 Gew.% |
| Weitere Zusatzstoffe | 0 - 5 Gew.% |

### Rezepturbeispiel 1: rote Mine

| | |
|---|---|
| Calciumstearat (GM) | 4 Gew.% |
| Na- Carboxymethylcellulose (BM) | 7 Gew.% |
| Polarwachs | 10 Gew.% |
| Talkum (FS) | 62 Gew.% |
| Pigment Rot 2 (FM 1) | 10 Gew.% |
| Pigment Rot 4 (FM 1) | 2 Gew.% |
| Titandioxid (FM2) | 5 Gew.% |

### Rezepturbeispiel 2: blaue Mine

| | |
|---|---|
| Calciumstearat (GM) | 4 Gew.% |
| Na-Carboxymethylcellulose (BM) | 7 Gew.% |
| Mikrowachs | 10 Gew.% |
| Talkum (FS) | 61 Gew.% |
| Pigment Blau 15:3 (FM 1) | 6 Gew.% |
| Pigment Violett 23 (FM 1) | 1 Gew.% |
| Titandioxid (FM 2) | 10 Gew.% |

Mit der vorliegenden Erfindung können die Stifteigenschaften, d.h. ein exzellentes Gleitverhalten und ein sehr gutes Abstrichverhalten hinsichtlich der Farbabgabe erreicht werden, ohne die eingangs genannten Nachteile in Kauf nehmen zu müssen.

Durch die erfindungsgemäße Minenzusammensetzung konnte eine Prozessvereinfachung durch Einsparung der Imprägnation und damit eine Zeitersparnis der Imprägnationsdauer von mindestens 24 h eingespart werden. Dies führt zu einer spürbaren Kostenersparnis beim Herstellungsprozess, nicht zuletzt da sich der Ausschuss durch Verzug reduziert. Die erfindungsgemäßen Minen weisen eine saubere Oberfläche, eine gute Verleimbarkeit, eine höhere Festigkeit auf, einen kräftigen bzw. satten Abstrich, ein sehr gutes Gleit- und Malverhalten und einen hohen Glanz auf.

Die **Herstellung** der erfindungsgemäßen Minen erfolgt wie aus dem Stand der Technik bekannt im Wesentlichen in folgenden Arbeitsschritten.
- In einem Schnellmischer werden das Bindemittel, das Gleitmittel, der Füllstoff, das Wachs und ggf. weitere Zusatzstoffe innig vermischt.
- Durch Zugabe von Wasser wird die Minenmasse auf eine Feuchte von ca. 12% gebracht.
- In einem weiteren Schritt wird ein so genannter Minenvorblock gebildet, welcher sodann mittels Extrusion zu einer Mine verpresst, abgelängt und getrocknet wird.

Bei den so hergestellten Minen handelt es sich um ungebrannte Minen. Der Vorteil in dem Verfahren zur Herstellung liegt darin, dass eine Imprägnation der Mine nach ihrer Herstellung entfallen kann.

## Patentansprüche

1. **Ungebrannte Mine** für Schreib-, Zeichen- und/oder Malgeräte, mindestens bestehend aus mindestens einem Füllstoff, mindestens einem Bindemittel und mindestens einem Gleitmittel, wobei die Mine ein Wachs auf Basis von Kohlenwasserstoffen und/oder Paraffinen mit einem Schmelzpunkt über 75°C aufweist, wobei das Bindemittel Na-Carboxymethylcellulose ist,
wobei die Mine mindestens einen Füllstoff mit schichtförmiger oder blättchenförmiger Kristallstruktur und/oder einer Korngröße kleiner 10 µm aufweist
und wobei sich die Mine aus
2 - 10 Gew. % Gleitmittel (GM),
4 -10 Gew. % Bindemittel (BM),
5 - 20 Gew. % Wachs,
30 - 70 Gew. % Füllstoff (FS),
0-18 Gew. % Pigmente (FM 1),
0 - 35 Gew. %Titandioxid (FM 2)
0 - 5 Gew. % weiteren Zusatzstoffen
zusammensetzt.

2. **Mine** nach Anspruch 1,
**dadurch gekennzeichnet,**
**dass** das Wachs einen Schmelzpunkt größer gleich 80°C aufweist.

3. **Mine** nach Anspruch 1,
**dadurch gekennzeichnet,**
**dass** das Wachs durch die Summenformel CₙH₂ₙ₊₂ beschrieben ist, wobei n in der Summenformel einen Wert bis zu 75 annehmen kann.

4. **Verfahren zur Herstellung** einer Mine nach Anspruch 1 in folgenden Arbeitsschritten:
- In einem Mischer werden die Komponenten Bindemittel, Gleitmittel, Füllstoff und Wachs sowie ggf. weitere Zusatzstoffe innig vermischt
- Zugabe von Wasser zur Minenmasse zur Einstellung einer definierten Feuchte.
- Bilden eines so genannten Minenvorblocks
- Durch Extrusion wird der Vorblock zu einer Mine verpresst
- Trocknung der Mine

## Claims

1. Unfired cartridge for writing, drawing and/or marking instruments, at least consisting of at least one filler, at least one binder and at least one lubricant, wherein the cartridge comprises a wax on the basis of hydrocarbons and/or paraffins with a melting point above 75° C, wherein the binder is Na-carboxymethyl cellulose, wherein the cartridge comprises at least one filler with a layer-shaped or lamella-shaped crystalline structure and/or a grain size less than 10 microns and wherein the cartridge is composed of 2 - 10 weight % lubricant (GM),
4 - 10 weight % binder (BM),
5 - 20 weight % wax,
30 - 70 weight % filler (FS),
0 - 18 weight % pigment (FM 1),
0 - 35 weight % titanium dioxide (FM 2) and
0 - 5 weight % further additives.

2. Cartridge according to claim 1, **characterised in that** the wax has a melting point greater than or equal to 80° C.

3. Cartridge according to claim 1, **characterised in that** the wax is described by the total formula CₙH₂ₙ₊₂, wherein n in the total formula can adopt a value up to 75.

4. Method of producing a cartridge according to claim 1 in the following working steps:
- the components of binder, lubricant, filler and wax as well as optionally further additives are intimately mixed in a mixer,
- addition of water to the cartridge mass for setting a defined moisture,
- forming a so-termed cartridge starting block,
- pressing the starting block by extrusion to form a cartridge and
- drying the cartridge.

## Revendications

1. Mine non calcinée, destinée à des instruments d'écriture, de dessin et/ou de peinture et comprenant au moins une substance de charge, au moins un liant et au moins un agent de glissement, ladite mine renfermant une cire à base d'hydrocarbures et/ou de paraffines présentant un point de fusion qui excède 75°C, le liant consistant en de la carboxyméthylcellulose de sodium,
ladite mine comportant au moins une substance de charge dotée d'une structure cristalline en forme de couches ou de paillettes, et/ou d'une grosseur de grains inférieure à 10 µm,
et ladite mine étant composée de
2 - 10 % en poids d'agent de glissement (GM),
4 - 10 % en poids de liant (BM),
5 - 20 % en poids de cire,
30 - 70 % en poids de substance de charge (FS),
0 - 18 % en poids de pigments (FM 1),
0 - 35 % en poids d'oxyde de titane (FM 2),
0 - 5 % en poids d'autres adjuvants.

2. Mine selon la revendication 1,
**caractérisée par le fait**
**que** la cire présente un point de fusion supérieur ou égal à 80°C.

3. Mine selon la revendication 1,
**caractérisée par le fait**
**que** la cire est décrite par la formule moléculaire CₙH₂ₙ₊₂, n pouvant prendre une valeur atteignant jusqu'à 75 dans ladite formule moléculaire.

4. Procédé de fabrication d'une mine selon la revendication 1, incluant les étapes opératoires suivantes :
- les composants englobant le liant, l'agent de glissement, la substance de charge et la cire, ainsi que d'autres adjuvants le cas échéant, sont brassés intimement dans un mélangeur,
- adjonction d'eau à la masse de la mine, en vue de régler une humidité bien définie,
- formation d'un « bloc de mine préformé »,
- ledit bloc préformé est comprimé par extrusion, pour constituer une mine,
- séchage de ladite mine.
